# EUROPEAN PATENT SPECIFICATION

(11) **EP 2 918 433 B1**
(45) Date of publication and mention of the grant of the patent: **30.05.2018**
(21) Application number: 15158916.5
(22) Date of filing: 13.03.2015
(51) Int. Cl.: B60H 1/00, B60K 37/02

(54) **VEHICLE AIR CONDITIONING APPARATUS**
FAHRZEUGKLIMAANLAGENVORRICHTUNG
APPAREIL DE CLIMATISATION POUR VÉHICULE

(30) Priority: 13.03.2014 JP 2014049789
(43) Date of publication of application: 16.09.2015
(73) Proprietor: MITSUBISHI JIDOSHA ENGINEERING KABUSHIKI KAISHA, Okazaki-shi Aichi 444-8501 (JP); Mitsubishi Jidosha Kogyo Kabushiki Kaisha, Tokyo 108-8410 (JP)
(72) Inventor: Hirayama, Tomoki, Okazaki-shi, Aichi 444-8501 (JP); Iida, Koji, Okazaki-shi, Aichi 444-8501 (JP)
(74) Representative: Regimbeau

(56) References cited:
- DE-U- 1 868 123
- JP-A- H07 290 935
- US-A1- 2003 176 159
- US-A1- 2006 234 619

## Description

### Technical Field

The present invention relates to a vehicle air conditioning apparatus.

### Background Art

An instrument panel on which instruments and on-board equipment such as an audio apparatus and an air conditioning apparatus are mounted is disposed in a front portion of a passenger compartment in such a way as to extend in a vehicle's widthwise or transverse direction.

A front defroster opening which performs as a front defroster is provided on an upper surface portion of the instrument panel which is oriented upwards, and side defroster openings which perform as side defrosters are provided individually at both transverse ends of a rear surface portion of the instrument panel which is oriented to the rear of the passenger compartment.

DE 1868123 U discloses a flow duct provided with indentations extending inwardly from a tubular wall of the duct.

In many of these air conditioning openings, a plurality of fins are provided in such a way as to be aligned in the same direction so as to partition the opening for conditioning air to be blown out thereof in a predetermined direction. Then, narrow elongated gaps are defined between the fins, as well as between the outermost fins and edge portions of the air conditioning opening.

Incidentally, in case a thin plate-like member such as a plastic card is erroneously inserted in the narrow elongated gap in the air conditioning opening configured in the way described above, the thin plate-like member eventually enters an air conditioning duct, resulting in a drawback in which the thin plate-like member becomes difficult to be taken out of the air conditioning duct.

Then, to cope with this, there are air conditioning openings in which a plurality of insertion preventive partitions are formed in the narrow elongated gap at intervals in a direction in which the gap extends, and these insertion preventive partitions each extend in a direction which is orthogonal to the direction in which the gap extends. Namely, the thin plate-like member is prevented from entering the air conditioning duct from the gap by providing the fins in a grid-like fashion so as to divide the gaps in the air conditioning opening into small gap portions.

### Citation List

### Patent Literature

[Patent Literature 1] JP-A-2006-123803
[Patent Literature 2] JP-A-2008-238853

### Summary of Invention

### Technical Problem

However, when the plurality of insertion preventive partitions are provided in each gap, the degree of freedom in designing the air conditioning opening is deteriorated, and the provision of such insertion preventive partitions becomes disadvantageous in improving the design properties of the air conditioning opening. In particular, in the case of air conditioning openings such as side defroster openings which are provided on the rear side (the passenger compartment side) of the instrument panel which is situated relatively near a driver and a front-seat passenger, the air conditioning openings are easily visualized, and hence, in case such insertion preventive partitions are provided therein in the way described above, the design properties of the air conditioning openings will be affected badly, leaving room for improvement.

The invention has been made in view of these situations, and an object thereof is to provide a vehicle air conditioning apparatus which is advantageous in improving the design properties of an air conditioning opening while preventing a thin plate-like member from entering an interior of an air conditioning duct.

### Solution to Problem

According to the invention, there is provided a vehicle air conditioning apparatus described in the accompanying claims.

### Advantageous Effect of Invention

According to the invention, even in the event that the thin plate-like member is erroneously inserted into the air conditioning opening, since the thin plate-like member is brought into abutment with the projecting portion, the thin plate-like member can be prevented from entering the air conditioning duct. Consequently, the necessity is obviated of providing a countermeasure against the erroneous insertion of the thin plate-like member in which the gaps in the air conditioning opening are divided into small gap portions by providing a plurality of partitions in each gap. Thus, this configuration of the invention is advantageous in realizing an improvement in design properties of the air conditioning opening.

Additionally, compared with a case where the projecting portion is provided at one portion of the air conditioning duct, the projecting amount of each of the projecting portions can be reduced, and therefore, the areas occupied by the projecting portion in the air conditioning duct can be reduced accordingly. Consequently, the area of a passage of conditioning air within the air conditioning duct can be ensured large, and hence, the configuration of the invention is advantageous in ensuring the flow rate of conditioning air.

It can be prevented that the upstream side projecting portion interferes with the downstream side projecting portion within the air conditioning duct, and this obviates the necessity of high accuracy in relation to the projecting height of the upstream side projecting portion and the projecting height of the downstream side projecting portion. Thus, the invention is advantageous in forming the air conditioning duct with the projecting portions inexpensively and in an ensured fashion.

Disturbance to the flow of conditioning air caused by the projecting portions is suppressed, and the invention is advantageous in ensuring the air conditioning performance of the air conditioning apparatus.

Making use of the wall portion which makes up the air conditioning duct is advantageous in forming the air conditioning duct with the projecting portions inexpensively and in an ensured fashion.

The invention is advantageous in forming the air conditioning duct with the projecting portions inexpensively and in an ensured fashion.

### Brief Description of Drawings

Fig. 1 is a perspective view of an air conditioning duct of a vehicle air conditioning apparatus according to a first embodiment.
Fig. 2 is a plan view of a portion of the air conditioning duct of the vehicle air conditioning apparatus according to the first embodiment which lies near an air outlet of the air conditioning duct.
Fig. 3(A) is a view as seen in a direction indicated by an arrow A in Fig. 2, Fig. 3(B) is a sectional view taken along a line B-B in Fig. 2, and Fig. 3(C) is a sectional view taken along a line C-C in Fig. 2.
Fig. 4 is a sectional view showing a state in which an air conditioning duct is connected to an air conditioning opening.
Fig. 5 is a perspective view of an air conditioning opening of the vehicle air conditioning apparatus according to the first embodiment.
Fig. 6 is an explanatory view showing a state in which thin plate-like members are inserted into the air conditioning duct from the air conditioning opening.
Fig. 7 is a sectional view of a portion of an air conditioning duct according to a second embodiment which lies near an air outlet of the air conditioning duct.

### Description of Embodiments

### (First Embodiment)

Hereinafter, an embodiment of the invention will be described by reference to the drawings.

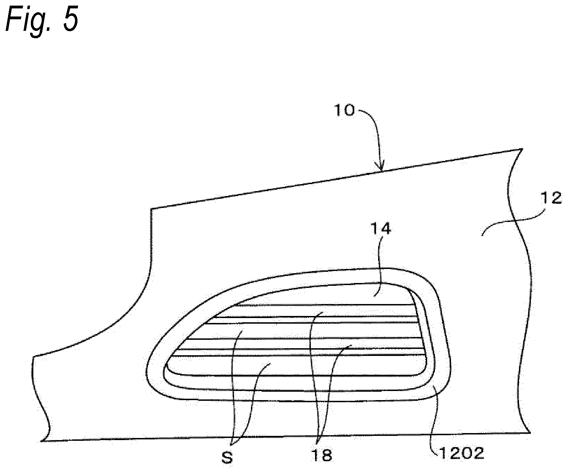

As shown in Fig. 5, an instrument panel 10 includes an upper surface portion (not shown) which is oriented upwards and a rear surface portion 12 which is oriented to the rear of a passenger compartment.

A front defroster opening (not shown) is provided in a middle portion of the upper surface portion, and this front defroster opening performs as a front defroster which blows conditioning air against a front windshield glass (not shown). A side defroster opening 14 is provided at each transverse end of the rear surface portion 12, and this side defroster opening 14 performs as a side defroster which blows conditioning air against a side windshield glass (not shown).

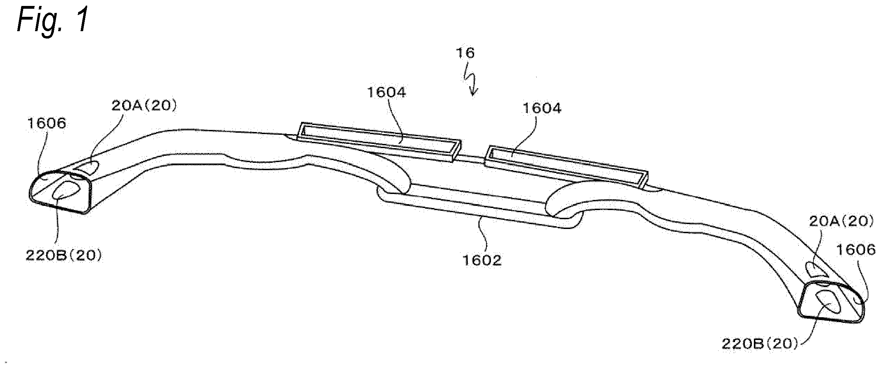

As shown in Fig. 1, an air conditioning duct 16 which is disposed inside the instrument panel 10 is connected to the front defroster opening and the side defroster openings 14.

A vehicle air conditioning apparatus of this embodiment is applied to portions of the air conditioning duct 16 which are connected to the side defroster openings 14.

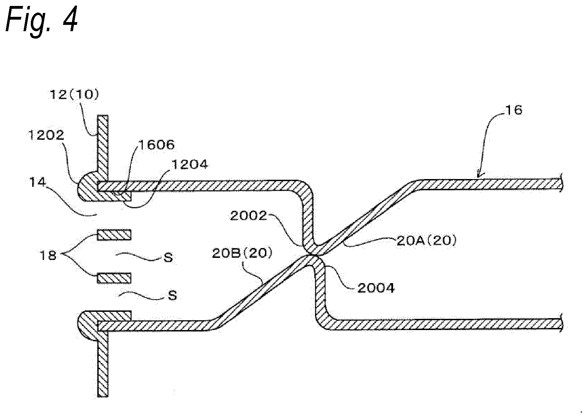

As shown in Figs. 4, 5, the side defroster opening 14 exhibits a horizontally elongated shape. A bulging portion 1202 for reinforcing the side defroster opening 14 is formed on a front surface of the rear surface portion 12 of the instrument panel 10 at a portion which surrounds an outer circumference of the side defroster opening 14. A tubular portion 1204 is provided on a rear surface of the rear surface portion 12 so that the air conditioning duct 16 is fitted thereon.

A plurality of fins 18 are provided at intervals in the side defroster opening 14 to direct conditioning air towards a front side window glass. In this embodiment, the plurality of fins 18 which extend in a horizontal direction are disposed in the side defroster opening 14 so as to be aligned vertically.

As a result of the plurality of fins 18 being provided in the side defroster opening 14, in the side defroster opening 14, narrow elongated gaps S are individually formed between the fins 18, as well as between the outermost fins 18 and the bulging portion 1202.

As shown in Fig. 1, the air conditioning duct 16 is made from synthetic resin and is formed through blow molding.

In the blow molding, a parison which is formed into a pipe-like shape from a molten synthetic resin is held by molds, and air is blown into an inside of the parison to obtain a hollow molded product.

An inlet port 1602 configured to suck in conditioning air supplied from an air conditioner main body, not shown, is provided in a longitudinal middle portion of the air conditioning duct 16.

Additionally, air outlet ports 1604 which are connected to the front defroster opening are provided in the longitudinal middle portion of the air conditioning duct 16, and air outlet ports 1606 which are connected individually to the side defroster openings 14 are provided individually at longitudinal ends of the air conditioning duct 16. These air outlet ports 1606 are fitted on the tubular portions 1204 of the side defroster openings 14 (Fig. 4), whereby the side defroster openings 14 and the air conditioning duct 16 are connected to each other.

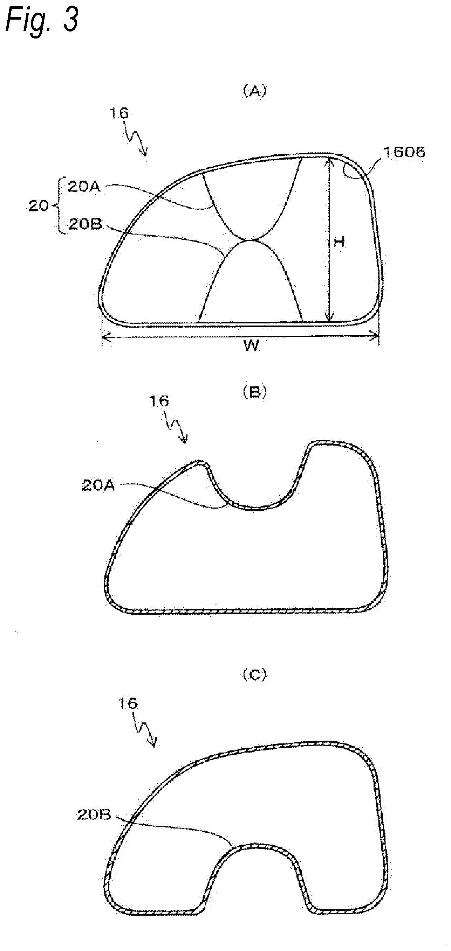

A portion of the air conditioning duct 16 which lies near the air outlet port 1606 has a cross section whose outline is almost the same as the side defroster opening 14. In this embodiment, as shown in Fig. 3(A), the portion has a horizontally elongated cross section in which a width W is larger than a height H.

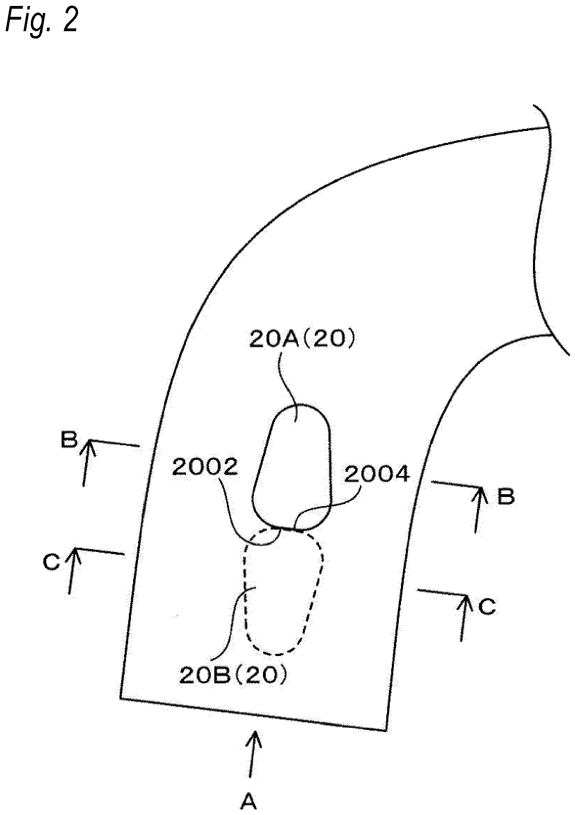

As shown in Figs. 1 to 4, a projecting portion 20 is provided in an interior of the air conditioning duct 16 in a position lying near the air outlet port 1606, that is, a position lying near the side defroster opening 14, and this projecting portion 20 projects in a direction which intersects a direction in which the fins 18 in the side defroster opening 14 extend. In this embodiment, the projecting portion 20 projects in the direction of the height H, that is, in a vertical direction so as to be orthogonal to the fins 18. A thin plate-like member 2 which is inserted from the side defroster opening 14 is brought into abutment with the projecting portion 20, and therefore, the projecting portion 20 performs to prevent the thin plate-like member 2 from entering the interior of the air conditioning duct 16.

Here, the thin plate-like member 2 is a plastic card such as a credit card or an electronic money card.

In this embodiment, the projecting portion 20 projects in the direction of the height H, that is, the vertical direction so as to be orthogonal to the fins 18 and is made up of an upper projecting portion (a first projecting portion) 20A which projects downwards from an upper wall of the air conditioning duct 16 and a lower projecting portion (a second projecting portion) 20B which projects upwards from a lower wall of the air conditioning duct 16. Additionally, the upper projecting portion 20A and the lower projecting portion 20B are provided at locations on a middle portion of the air conditioning duct 16 in relation to the direction of the width W which face each other in relation to the direction of the height H (the vertical direction). Namely, the pair of projecting portions 20 are provided so as to face each other in the vertical direction.

In this way, the projecting portion 20 is made up of the upper projecting portion 20A and the lower projecting portion 20B, and the upper projecting portion 20A and the lower projecting portion 20B are disposed so as to face each other, whereby respective projecting amounts or lengths in the direction of the height H (the vertical direction) of the projecting portions 20 (the upper projecting portion 20A and the lower projecting portion 20B) can be made short. A lateral width of the projecting portions 20 can be reduced by suppressing the projecting amounts of the projecting portions 20 (the upper projecting portion 20A and the lower projecting portion 20B). Therefore, compared with a case where the projecting portion 20 is made up of a single projecting portion, an area of an air passage inside the air conditioning duct 16 can be ensured wide.

The projecting portion 20 is provided at a portion in the air conditioning duct 16 which lies by a predetermined distance inwards from the air outlet port 1606. Here, the predetermined distance means a distance which is set so that the thin plate-like member 2 inserted from the side defroster opening 14 is brought into abutment with the projecting portion to thereby be prevented from entering completely in the interior of the air conditioning duct 16.

The projecting portion 20 is formed as a result of the wall portion which makes up the air conditioning duct 16 being displaced inwards of the air conditioning duct 16.

Consequently, this configuration of the invention is advantageous in forming the air conditioning duct 16 with the projecting portion 20 inexpensively and in an ensured fashion by making use of the wall portion which makes up the air conditioning duct 16.

In this embodiment, the projecting portion 20 is formed together with the air conditioning duct 16 through blow molding. Namely, the projecting portion 20 is formed by making use of molds which are used to mold the air conditioning duct 16 in the blow molding.

Consequently, the configuration of the invention is advantageous in forming the projecting portion 20 easily and in an ensured fashion.

In this embodiment, the projecting portion 20 includes the upstream side projecting portion 20A and the downstream side projecting portion 20B which are provided at the locations on the middle portion of the air conditioning duct 16 in relation to the direction of the width W which face each other in relation to the direction of the height H.

The constructions of the upper projecting portion 20A and the lower projecting portion 20B which make up the projecting portion 20 will be described in detail below.

The upper projecting portion 20A and the lower projecting portion 20B extend along the direction in which the air conditioning duct 16 extends.

The upper projecting portion 20A and the lower projecting portion 20B are provided so as to shift in phase in the direction in which the air conditioning duct 16 extends. Namely, the upper projecting portion 20A is disposed further upstream of a flow of air which flows in the air conditioning duct 16 than the lower projecting portion 20B. When looking at the air conditioning duct 16 from the direction of the height H, a downstream end 2002 of the upper projecting portion 20A and an upstream end 2004 of the lower projecting portion 20B overlap.

When a portion of the air conditioning duct 16 where the upper projecting portion 20A is present is cut along a plane which is orthogonal to the direction in which the air conditioning duct 16 extends, the upper projecting portion 20A is formed so that an area occupied by the upper projecting portion 20A within the air conditioning duct 16 is gradually reduced from the downstream side towards the upstream side of the flow of conditioning air which flows in the air conditioning duct 16. Namely, the upper projecting portion 20A is formed into a downwardly inclined shape so that the projecting amount thereof into the air conditioning duct 16 increases gradually as it extends from the upstream side to the downstream side of the air conditioning duct 16. Consequently, an end portion (a projecting end) of the downstream end 2002 of the upper projecting portion 20A constitutes a portion which projects most into the interior of the air conditioning duct 16.

When the upper projecting portion 20A is configured in the way described above, disturbance to the flow of conditioning air which would otherwise be caused by the upper projecting portion 20A is suppressed, whereby conditioning air is allowed to be blown from the side defroster opening 14 against the front side window glass in a stable fashion. Thus, the configuration of the upper projecting portion 20A is advantageous in allowing the function of the side defroster to be exhibited effectively.

When a portion of the air conditioning duct 16 where the lower projecting portion 20B is present is cut along the plane which is orthogonal to the direction in which the air conditioning duct 16 extends, the lower projecting portion 20B is formed so that an area occupied by the lower projecting portion 20B within the air conditioning duct 16 is gradually reduced from the upstream side towards the downstream side of the flow of conditioning air which flows in the air conditioning duct 16. Namely, the lower projecting portion 20B is formed into an upwardly inclined shape so that the projecting amount thereof into the air conditioning duct 16 increases gradually as it extends from the downstream side to the upstream side of the air conditioning duct 16. Consequently, an end portion (a projecting end) of the upstream end 2004 of the lower projecting portion 20B constitutes a portion which projects most into the interior of the air conditioning duct 16.

When the lower projecting portion 20B is configured in the way described above, disturbance to the flow of conditioning air which would otherwise be caused by the lower projecting portion 20B is suppressed, whereby conditioning air is allowed to be blown from the side defroster opening 14 against the front side window glass in a stable fashion. Thus, the configuration of the lower projecting portion 20B is advantageous in allowing the function of the side defroster to be exhibited effectively.

The end portion (the projecting end) of the downstream end 2002 which constitutes the portion which projects most in the upper projecting portion 20A and the end portion (the projecting end) of the upstream end 2004 which constitutes the portion which projects most in the lower projecting portion 20B are disposed so as to face each other in the direction of the height H (the vertical direction) and are located close enough to be brought into contact with each other or are brought into abutment with each other. This can restrict the air conditioning duct 16 from being deformed as a result of the upper projecting portion 20A and the lower projecting portion 20B being brought into abutment with each other even though, for example, a working person grips on the air conditioning duct 16 at a portion lying near the air outlet port 1606 when he or she assembles the air conditioning duct 16 to the side defroster opening 14, thereby making is possible to improve the workability.

With a widthwise end 2A of the thin plate-like member 2 positioned within the side defroster opening 14, the other widthwise end 2B of the thin plate-like member 2 can be brought into abutment with the upper projecting portion 20A and the lower projecting portion 20B.

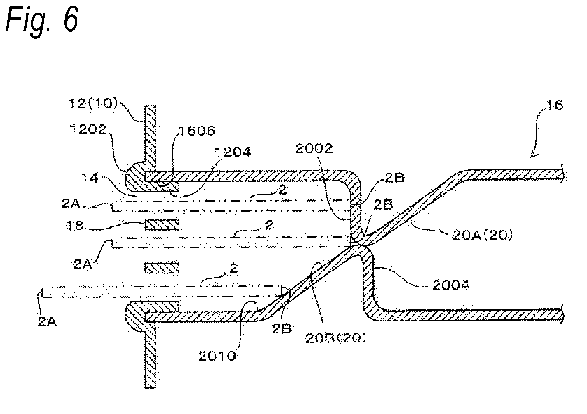

To describe this in greater detail, as shown in Fig. 6, the end portion 2B of the thin plate-like member 2 which enters from an upper half portion of the side defroster opening 14 in the direction of the height H (the vertical direction) can be brought into abutment with the downstream end 2002 of the upstream side projecting portion 20A. Additionally, the end portion 2B of the thin plate-like member 2 which enters from a lower half portion of the side defroster opening 14 in the direction of the height can be brought into abutment with a portion of the downstream side projecting portion 20B which lies upstream of a downstream end 2010 of the downstream side projecting portion 20B. Additionally, the end portion 2B of the thin plate-like member 2 which enters from a middle portion of the side defroster opening 14 in the direction of the height H (the vertical direction) can be brought into abutment with the downstream end 2002 of the upper projecting portion 20Aor a portion of the lower projecting portion 20B which lies upstream of the downstream end 2010 of the lower projecting portion 20B.

According to this embodiment, even in the event that the occupant or a person standing outside the passenger compartment erroneously inserts the thin plate-like member 2 into the side defroster opening 14 in the passenger compartment, since the end portion 2B of the thin plate-like member 2 is brought into abutment with the upper projecting portion 20A or the lower projecting portion 20B, the thin plate-like member 2 can be prevented from entering the air conditioning duct 16.

Consequently, the necessity is obviated of providing a plurality of insertion preventive partitions are provided in each of the gaps defined between the fins 18 in the side defroster opening 14 to divide each of the gaps in the opening into small gap portions, and therefore, this configuration is advantageous in realizing an improvement in design properties of the side defroster opening 14.

In addition, the upper projecting portion 20A and the lower projecting portion 20B are provided in the interior of the air conditioning duct 16 in the position which lies by a predetermined distance inwards away from the air outlet port 1606. Thus, the upper projecting portion 20A and the lower projecting portion20B are provided as far away from the side defroster opening 14 as possible, and therefore, disturbance to a flow of conditioning air blown out from the side defroster opening 14 can be restricted. Consequently, it is possible to prevent the ingress of the thin plate-like member 2 into the air conditioning duct 16 while allowing the side defroster opening 4 to exhibit the function of the side defroster.

In this embodiment, the two projecting portions 20, that is, the upper projecting portion 20A and the lower projecting portion 20B are provided close enough to be brought into contact with each other or are provided so as to be brought into abutment with each other while the two projecting portions 20 are facing each other vertically. Therefore, compared with a case where the projecting portion 20 is provided at one location in the air conditioning duct 16, the area (the lateral width) occupied by the projecting portion 20 within the air conditioning duct 16 is reduced, while making it sure to acquire a large area for the passage of air in the air conditioning duct 16. Thus, this configuration is advantageous in ensuring the flow rate of conditioning air.

Namely, in relation to providing the projecting portion 20 through blow molding, when the projecting portion 20 is provided at one location in the air conditioning duct 16, the projecting portion 20 needs to project in height from the location where the projecting portion 20 is provided to a wall portion which faces the location vertically, thereby increasing the height-wise dimension of the projecting portion 20. Because of this, when taking draft angles of molds into consideration, the width of the projecting portion 20 is increased, which inevitably increases the area occupied by the projecting portion 20 within the air conditioning duct 16.

In contrast with this, according to the embodiment of the invention, when the projecting portions 20 are provided at the locations in the air conditioning duct 16 which face each other, the projecting portions 20 only have to project to the middle portion in the interior of the air conditioning duct 16, thereby reducing the height-wise dimensions of the projecting portions 20. Because of this, even when the draft angles of the molds are taken into consideration, the width of the projecting portions 20 can be reduced, whereby the area occupied by each of the projecting portions 20 in the air conditioning duct 16 can be reduced.

The air conditioning duct 16 is formed through blow molding and extends over almost the full width of the vehicle. Thus, since the air conditioning duct 16 has the large shape, the parison tends to be deformed easily, thereby facilitating the generation of a thin portion. Because of this, a conventional air conditioning duct 16 tends to have a thin portion, and hence, the rigidity thereof is weakened, whereby the conventional air conditioning duct 16 is easily deformed. Thus, with the conventional air conditioning duct 16, the assemblage of the air outlet port 1606 to the side defroster opening 14 requires care, and hence, the conventional air conditioning duct 16 is disadvantageous in enhancing the efficiency of the assembling work thereof.

In this embodiment, since the projecting portion 20 is provided near the air outlet port 1606 of the air conditioning duct 16, the rigidity of the air conditioning duct 16 at the portion near the air outlet port 1606 is ensured by the projecting portion 20. Thus, the embodiment of the invention is advantageous in enhancing the efficiency of the assembling work of the air conditioning duct 16.

### (Second Embodiment)

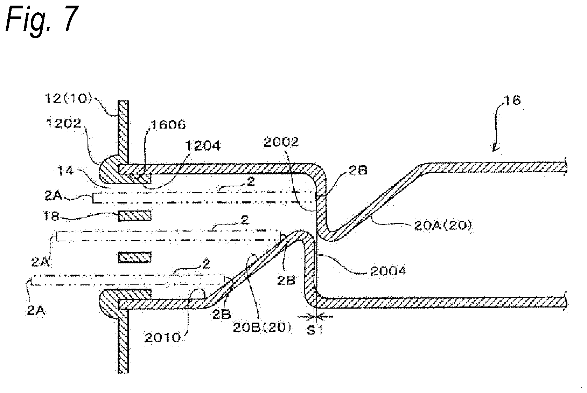

Next, referring to Fig. 7, a second embodiment of the invention will be described below.

In the following embodiment, like reference numerals will be given to like portions and members to those of the first embodiment, and the description thereof will be omitted.

In the second embodiment, a relative position between an upstream side projecting portion 20A and downstream side projecting portion 20B differs from that of the first embodiment.

Namely, while the end portion (the projecting end) of the downstream end 2002 of the upper projecting portion 20A is close enough to be brought into contact with the end portion (the projecting end) of the upstream end 2004 of the lower projecting portion 20B while facing each other in the direction of the height H in the first embodiment, in the second embodiment, an end portion (a projecting end) of a downstream end 2002 of the upper projecting portion 20A and an end portion (a projecting end) of an upstream end 2004 of the lower projecting portion 20B are provided so as to overlap in a direction in which an air conditioning duct 16 extends. Additionally, a gap S1 defined in the direction in which the air conditioning duct 16 extends is provided between the end portion (the projecting end) of the downstream end 2002 of the upper projecting portion 20A and the end portion (the projecting end) of the upstream end 2004 of the lower projecting portion 20B.

In this way, in case the gap S1 is provided between the end portion (the projecting end) of the downstream end 2002 of the upper projecting portion 20A and the end portion (the projecting end) of the upstream end 2004 of the lower projecting portion 20B, there are no fears that the end portion (the projecting end) of the downstream end 2002 of the upper projecting portion 20A and the end portion (the projecting end) of the upstream end 2004 of the lower projecting portion 20B interfere with each other in the direction of the height H of the air conditioning duct 16. This obviates the necessity of high accuracy in relation to the projecting height of the end portion (the projecting end) of the downstream end 2002 of the upper projecting portion 20A and the projecting height of the end portion (the projecting end) of the upstream end 2004 of the lower projecting portion 20B. Thus, the configuration of the second embodiment is advantageous in forming the air conditioning duct 16 with the projecting portion 20 inexpensively and in an ensured fashion.

### Reference Signs List

2: thin plate-like member
10: instrument panel
14: side defroster opening (air conditioning opening)
16: air conditioning duct
20: projecting portion
20A: upper projecting portion (first projecting portion)
20B: lower projecting portion (second projecting portion)
2002: downstream end
2004: upstream end
S1: gap.

## Claims

1. A vehicle air conditioning apparatus, comprising:
an air conditioning opening (14) which is provided in an instrument panel (10);
an air conditioning duct (16) which connects to the air conditioning opening (14); and
a projecting portion (20) provided in an interior of the air conditioning duct (16) in a position lying near the air conditioning opening (14), the projecting portion (20) including a first projecting portion (20A) and a second projecting portion (20B) which are provided at portions in the air conditioning duct (16) which face each other, the projecting portion (20) also including an end portion (2002) of the first projecting portion (20A) and an end portion (2004) of the second projecting portion (20B) which are placed at close positions with each other,
the vehicle air conditioning apparatus being **characterized in that**
the air conditioning opening is provided with fins (18) extending in a direction in the air conditioning opening (14), that
the projection portion (20) projects in a direction intersecting the direction in which the fins (18) extend, so as to come in abutment with a thin plate-like member which enters the air conditioning duct (16) from the air conditioning opening (14) to prevent the thin plate-like member from moving into the interior of the air conditioning duct (16), that
the first projecting portion (20A) and the second projecting portion (20B) are provided so as to shift in phase in a direction in which the air conditioning duct (16) extends, that
the end portion (2002) of the first projecting portion (20A) is placed further upstream of a flow of conditioning air than the end portion (2004) of the second projecting portion (20B) in the direction in which the air conditioning duct extends, and that
a gap (S1) is formed between the end portion (2002) of the first projecting portion (20A) and the end portion (2004) of the second projecting portion (20B).

2. The vehicle air conditioning apparatus according to Claim 1, wherein
the first projecting portion (20A) and the second projecting portion (20B) extend in the direction in which the air conditioning duct (16) extends,
in case a portion of the air conditioning duct (16) where the first projecting portion (20A) is provided is cut along a plane which is orthogonal to the direction in which the air conditioning duct (16) extends, an area occupied by the first projecting portion (20A) within the air conditioning duct is gradually reduced from a portion of the first projecting portion (20A) which is situated downstream of a flow of conditioning air which flows in the air conditioning duct towards a portion of the first projecting portion (20A) which is situated upstream of the flow of conditioning air, and
in case a portion of the air conditioning duct (16) where the second projecting portion (20B) is provided is cut along a plane which is orthogonal to the direction in which the air conditioning duct (16) extends, an area occupied by the second projecting portion (20B) within the air conditioning duct is gradually reduced from a portion of the second projecting portion which is situated upstream of a flow of conditioning air which flows in the air conditioning duct towards a portion of the first projecting portion (20A) which is situated downstream of the flow of conditioning air.

3. The air conditioning apparatus according to Claim 1 or 2, wherein
the projecting portion (20) is formed by displacing a part of a wall portion which makes up the air conditioning duct inwards of the air conditioning duct.

4. The air conditioning apparatus according to any one of Claims 1 to 3, wherein
the projecting portion (20) is formed together with the air conditioning duct through blow molding.

## Patentansprüche

1. Fahrzeugklimaanlagenvorrichtung, die Folgendes umfasst:
eine Klimaanlagenöffnung (14), die in einem Armaturenbrett (10) bereitgestellt ist;
eine Klimaanlagenleitung (16), die mit der Klimaanlagenöffnung (14) verbunden wird; und
einen hervorstehenden Abschnitt (20), der in einem Inneren der Klimaanlagenleitung (16) in einer Position bereitgestellt ist, die in der Nähe der Klimaanlagenöffnung (14) liegt, wobei der hervorstehende Abschnitt (20) einen ersten hervorstehenden Abschnitt (20A) und einen zweiten hervorstehenden Abschnitt (20B) umfasst, die an Abschnitten in der Klimaanlagenleitung (16) bereitgestellt sind, die einander zugewandt sind, wobei der hervorstehende Abschnitt (20) auch einen Endabschnitt (2002) des ersten hervorstehenden Abschnitts (20A) und einen Endabschnitt (2004) des zweiten hervorstehenden Abschnitts (20B) umfasst, die an einander nahen Positionen platziert sind,
wobei die Fahrzeugklimaanlagenvorrichtung **dadurch gekennzeichnet ist, dass**
die Klimaanlagenöffnung mit Rippen (18) versehen ist, die sich in einer Richtung in der Klimaanlagenöffnung (14) erstrecken, dass
der Vorsprungsabschnitt (20) in eine Richtung hervorsteht, die die Richtung schneidet, in der sich die Finnen (18) erstrecken, derart, dass er mit einem dünnen plattenartigen Element in Anschlag gelangt, das von der Klimaanlagenöffnung (14) in die Klimaanlagenleitung (16) eindringt, um zu verhindern, dass das dünne, plattenartige Element sich in das Innere der Klimaanlagenleitung (16) bewegt, dass
der erste hervorstehende Abschnitt (20A) und der zweite hervorstehende Abschnitt (20B) derart bereitgestellt sind, dass sie sich phasengleich in eine Richtung verschieben, in der die Klimaanlagenleitung (16) sich erstreckt, dass
der Endabschnitt (2002) des ersten hervorstehenden Abschnitts (20A) weiter stromaufwärts einer Strömung von Klimatisierungsluft platziert ist als der Endabschnitt (2004) des zweiten hervorstehenden Abschnitts (20B) in der Richtung, in der sich die Klimaanlagenleitung erstreckt, und dass
eine Lücke (S1) zwischen dem Endabschnitt (2002) des ersten hervorstehenden Abschnitts (20A) und dem Endabschnitt (2004) des zweiten hervorstehenden Abschnitts (20B) gebildet ist.

2. Fahrzeugklimaanlagenvorrichtung nach Anspruch 1, wobei
der erste hervorstehende Abschnitt (20A) und der zweite hervorstehende Abschnitt (20B) sich in die Richtung erstrecken, in der sich die Klimaanlagenleitung (16) erstreckt,
in dem Fall, in dem ein Abschnitt der Klimaanlagenleitung (16), wo der erste hervorstehende Abschnitt (20A) bereitgestellt ist, entlang einer Ebene geschnitten ist, die orthogonal zu der Richtung ist, in der sich die Klimaanlagenleitung (16) erstreckt, ein Bereich, der durch den ersten hervorstehenden Abschnitt (20A) innerhalb der Klimaanlagenleitung eingenommen wird, allmählich von einem Abschnitt des ersten hervorstehenden Abschnitts (20A), der sich stromabwärts einer Strömung von Klimatisierungsluft erstreckt, die in der Klimaanlagenleitung strömt, in Richtung eines Abschnitts des ersten hervorstehenden Abschnitts (20A) verringert ist, der sich stromaufwärts der Strömung der Klimatisierungsluft befindet, und
in einem Fall, in dem ein Abschnitt der Klimaanlagenleitung (16), wo der zweite hervorstehende Abschnitt (20B) bereitgestellt ist, entlang einer Ebene geschnitten ist, die orthogonal zu der Richtung ist, in der sich die Klimaanlagenleitung (16) erstreckt, ein Bereich, der durch den zweiten hervorstehenden Abschnitt (20B) innerhalb der Klimaanlagenleitung eingenommen wird, allmählich von einem Abschnitt des zweiten hervorstehenden Abschnitts, der sich stromaufwärts einer Strömung von Klimatisierungsluft befindet, die in der Klimaanlagenleitung strömt, in Richtung eines Abschnitts des ersten hervorstehenden Abschnitts (20A) verringert wird, der sich stromabwärts der Strömung von Klimatisierungsluft befindet.

3. Klimaanlagenvorrichtung nach Anspruch 1 oder 2, wobei
der hervorstehende Abschnitt (20) durch Verschieben eines Teils eines Wandabschnitts, der die Klimaanlagenleitung ausmacht, in Richtung des Inneren der Klimaanlagenleitung gebildet wird.

4. Klimaanlagenvorrichtung nach einem der Ansprüche 1 bis 3, wobei
der hervorstehende Abschnitt (20) zusammen mit der Klimaanlagenleitung durch Blasformen gebildet ist.

## Revendications

1. Appareil de climatisation pour véhicule, comprenant :
une ouverture de climatisation (14) qui est prévue dans un tableau de bord (10) ;
un conduit de climatisation (16) qui se raccorde à l'ouverture de climatisation (14) ; et
une partie en saillie (20) prévue dans un intérieur du conduit de climatisation (16) dans une position à proximité de l'ouverture de climatisation (14), la partie en saillie (20) comprenant une première partie en saillie (20A) et une seconde partie en saillie (20B) qui sont prévues au niveau des parties dans le conduit de climatisation (16) qui se font face, la partie en saillie (20) comprenant également une partie d'extrémité (2002) de la première partie en saillie (20A) et une partie d'extrémité (2004) de la seconde partie en saillie (20B) qui sont placées dans des positions à proximité l'une de l'autre,
l'appareil de climatisation pour véhicule étant **caractérisé en ce que** :
l'ouverture de climatisation est prévue avec des ailettes (18) s'étendant dans une direction dans l'ouverture de climatisation (14), **en ce que** :
la partie de saillie (20) fait saillie dans une direction coupant la direction dans laquelle les ailettes (18) s'étendent, afin de venir en butée avec un élément fin en forme de plaque qui pénètre dans le conduit de climatisation (16) à partir de l'ouverture de climatisation (14) pour empêcher l'élément fin en forme de plaque de se déplacer à l'intérieur du conduit de climatisation (16), **en ce que** :
la première partie en saillie (20A) et la seconde partie en saillie (20B) sont prévues afin de présenter un décalage de phase dans une direction dans laquelle le conduit de climatisation (16) s'étend, **en ce que** :
la partie d'extrémité (2002) de la première partie en saillie (20A) est placée davantage en amont d'un flux de climatisation que la partie d'extrémité (2004) de la seconde partie en saillie (20B) dans la direction dans laquelle le conduit de climatisation s'étend, et **en ce que** :
un espace (S1) est formé entre la partie d'extrémité (2002) de la première partie en saillie (20A) et la partie d'extrémité (2004) de la seconde partie en saillie (20B).

2. Appareil de climatisation pour véhicule selon la revendication 1, dans lequel :
la première partie en saillie (20A) et la seconde partie en saillie (20B) s'étendent dans la direction dans laquelle le conduit de climatisation (16) s'étend,
dans le cas dans lequel une partie du conduit de climatisation (19) où la première partie en saillie (20A) est prévue, est coupée le long d'un plan qui est orthogonal à la direction dans laquelle le conduit de climatisation (16) s'étend, une zone occupée par la première partie en saillie (20A) à l'intérieur du conduit de climatisation est progressivement réduite à partir d'une partie de la première partie en saillie (20A) qui est située en aval d'un flux de climatisation qui s'écoule dans le conduit de climatisation vers une partie de la première partie en saillie (20A) qui est située en amont du flux de climatisation, et
dans le cas dans lequel une partie du conduit de climatisation (16) où la seconde partie en saillie (20B) est prévue, est coupée le long d'un plan qui est orthogonal à la direction dans laquelle le conduit de climatisation (16) s'étend, une zone occupée par la seconde partie en saillie (20B) à l'intérieur du conduit de climatisation est progressivement réduite à partir d'une partie de la seconde partie en saillie qui est située en amont d'un flux de climatisation qui s'écoule dans le conduit de climatisation vers une partie de la première partie en saillie (20A) qui est située en aval du flux de climatisation.

3. Appareil de climatisation pour véhicule selon la revendication 1 ou 2, dans lequel :
la partie en saillie (20) est formée en déplaçant une partie d'une partie de paroi qui compose le conduit de climatisation vers l'intérieur du conduit de climatisation.

4. Appareil de climatisation pour véhicule selon l'une quelconque des revendications 1 à 3, dans lequel :
la partie en saillie (20) est formée conjointement avec le conduit de climatisation par le biais du moulage par extrusion-soufflage.
